# EUROPEAN PATENT APPLICATION

(11) **EP 3 246 297 A1**
(43) Date of publication of application: **22.11.2017**
(21) Application number: 15877922.3
(22) Date of filing: 23.10.2015
(51) Int. Cl.: C03C 15/00, C03C 19/00, C03C 21/00, G02F 1/1333

(54) **ANTIGLARE GLASS SHEET ARTICLE FOR DISPLAY DEVICE AND METHOD OF MANUFACTURING SAME**

(30) Priority: 14.01.2015 JP 2015004651; 07.07.2015 JP 2015136045
(71) Applicant: Central Glass Company, Limited, Yamaguchi 755-0001 (JP)
(72) Inventor: SATO, Yohei, Matsusaka-shi Mie 515-0001 (JP); TANAKA, Katsuto, Matsusaka-shi Mie 515-0001 (JP)
(74) Representative: Manitz Finsterwald Patentanwälte PartmbB
(86) International application number: PCT/JP2015/079913
(87) International publication number: WO 2016/113970

(57) **Abstract**

Disclosed herein is an antiglare glass sheet article for display devices in which at least one main surface of the glass sheet is roughened. The article has a roughened surface that includes: a surface with continuous irregularities having an arithmetic average roughness (Ra) of 0.01 to 0.1 µm, and an average interval (RSm) of 1 to 20 µm; and depressions dispersed over the surface and each having a circular entrance portion measuring 3 to 20 µm in diameter, and a depth of 0.2 to 1.5 µm from the entrance portion, the roughened surface having 60 to 600 of the depressions in an observed 250 µm × 250 µm region. The article has desirable antiglare properties with reduced sparkling.

## Description

### TECHENICAL FIELD

The present invention relates to glass sheet articles, for example, a glass sheet and a cover glass, disposed on the image viewing side of display devices such as liquid crystal displays, and to an antiglare glass sheet article for improving visibility of a display device.

### BACKGROUND ART

Antiglare glass sheet articles are used to reduce specular reflection of ambient light in display devices such as liquid crystal displays, and organic EL displays. The antiglare function is provided by suitable irregularities formed on a surface of such glass sheet articles, and a glass provided with such irregularities is proposed as a cover glass for display devices (for example, PTL 1 to PTL 5). From the perspective of the glare, the sharpness, and the white blur seen in LCDs, NPL 1 introduces how the relationship between the surface roughness of irregularities and the distance between irregularities should be optimized for the shape of irregularities that provides an antiglare function. NPL 1 teaches that an irregular structure needs to satisfy the relationship in "surface roughness/distance between raised portions ≤ 0.008" in order to provide the antiglare function. Furthermore, for different applications, PTL 6 discloses forming an irregular pattern on a glass sheet surface by etching a sandblasted glass sheet surface, and using the glass sheet with the irregular pattern as a cover glass for solar cells.

### PRIOR ART LITERATURE

### PATENT LITERATURE

PTL 1: JP-A-8-165144
PTL 2: JP-A-2004-240548
PTL 3: JP-A-2010-070445
PTL 4: JP-T-2014-513029
PTL 5: JP-T-2014-523384
PTL 6: JP-A-2014-237558

### NON PATENT LITERATURE

NPL 1: Atsushi Kitagawa, Takuya Matsunaga, "Development of Surface Treatment Technique for High-Resolution LCDs," Nitto Gihou, Vol. 40, No. 1, May, 2002, pp. 29 to 31

### SUMMARY OF THE INVENTION

### TECHENICAL PROBLEM

In order to reduce specular reflection of an antiglare glass sheet article, the surface irregularities formed on an article surface need to have a recessed (depressed) and a raised shape with a certain size. An antiglare glass sheet article also scatters light from a display device. If there is variation for each pixel in terms of the surface irregularities of the antiglare glass sheet article which face each pixel of the display device, the recessed (depressed) and raised portions with a certain size act like lenses. In this case, as the extent of light scattering varies for each pixel, this is perceived as glare by a viewer. This phenomenon is called sparkle or sparkling.

In antiglare glass sheet articles used for display devices, there is a trade-off between antiglare properties and the sparkling. The invention is intended to provide a glass sheet article having desirable antiglare properties and reduced sparkling.

### SOLUTION TO PROBLEM

An antiglare glass sheet article for a display device of the invention is an antiglare glass sheet article comprising a glass sheet at least one main surface of which is roughened, wherein the roughened surface includes: a surface with continuous irregularities having an arithmetic average roughness (Ra) of 0.01 to 0.1 µm, and an average interval (RSm) of 1 to 20 µm; and depressions dispersed over the surface and each having a circular entrance portion measuring 3 to 20 µm in diameter, and a depth of 0.2 to 1.5 µm from the entrance portion, and the roughened surface has 60 to 600 of the depressions in an observed 250 µm × 250 µm region. Additionally, the glass sheet becomes the light incident surface (or the visible light reflecting surface) when the article of the invention is used as a glass substrate or a cover glass of a display device.

In the invention, the roughened surface is configured from a surface with continuous irregularities having an arithmetic average roughness (Ra) of 0.01 to 0.1 µm, and an average interval (RSm) of 1 to 20 µm (hereinafter, referred to as "basal irregular surface"), and depressions dispersed over the basal irregular surface and having a circular entrance portion measuring 3 to 20 µm in diameter, and a depth of 0.2 to 1.5 µm from the entrance portion (hereinafter, referred to as "dispersive depressions"). With the dispersive depressions dispersed over the basal irregular surface, the glass sheet article can have desirable antiglare properties with reduced sparkling.

### <Basal Irregular Surface>

The basal irregular surface scatters visible light reflected by the glass sheet surface while ensuring passage of visible light through the glass sheet article. When the arithmetic average roughness (Ra) of the basal irregular surface is less than 0.01 µm, the extent of scattering of the reflected visible light at the glass sheet surface becomes smaller. This increases the glossiness (i.e. gloss value) of the glass sheet article, and often impairs the antiglare properties of the article. When the arithmetic average roughness (Ra) is more than 0.1 µm, the haze of the glass sheet article increases, and the article often suffers from poor visibility. Considering these factors, the arithmetic average roughness (Ra) has a lower limit of preferably 0.02 µm or more, more preferably 0.03 µm or more, and an upper limit of 0.07 µm or less, more preferably 0.06 µm or less.

In the basal irregular surface, when an average interval (RSm) is less than 1 µm, the interval is too small, so this causes difficulties in making an article. When the average interval (RSm) is more than 20 µm, the extent of scattering of reflected visible light at a glass sheet surface becomes smaller. This increases the gloss value of the glass sheet article, and often impairs the antiglare properties of the article. Considering these factors, the average interval (RSm) has a lower limit of preferably 2 µm or more, more preferably 3 µm or more, and an upper limit of 18 µm or less, more preferably 15 µm or less.

The arithmetic average roughness (Ra), and the average interval (RSm) of the basal irregular surface are measured as follows. The glass sheet surface is measured by an optical technique using a laser microscope, and a 30 µm × 30 µm region containing no dispersive depression is set through visual observation of the surface shape pattern of the measured surface. Then, the arithmetic average values calculated from the height data according to JIS B0601 (2013) are regarded as the arithmetic average roughness (Ra) and the average interval (RSm).

### <Dispersive Depressions>

The dispersive depressions enhance the effect that scatters reflected visible light at the glass sheet surface, and provides the glass sheet article of the invention with desirable antiglare properties. The depressions have entrance portions that are circular in shape. It becomes difficult to produce articles when the diameter of the entrance portion is less than 3 µm. With a diameter of more than 20 µm, the depressions show the lens effect, and the sparkling phenomenon comes likely to occur in locations where the dispersive depressions are present. Considering these factors, the diameter has a lower limit of preferably 5 µm or more, more preferably 7 µm or more, and an upper limit of preferably 18 microns or less, more preferably 15 µm or less.

The entrance portion is defined by the following procedures (1) and (2).
(1) The average height Rc of roughness curve components on the basal irregular surface is determined (arithmetic average value according to JIS B0601 (2013)), and used as a reference for the roughened surface.
(2) The entrance portion is where a circular surface is formed by the reference and the depression in a front view of the roughened surface.

In the dispersive depressions, when the depth from the entrance portion is less than 0.2 µm, the antiglare effect tends to be smaller in locations where the dispersive depressions are present. When the depth is more than 1.5 µm, the extent of scattering of visible light increases in locations where the dispersive depressions are present, and the display device tends to suffer from poor visibility. Considering these factors, the depth has a lower limit of preferably 0.5 µm or more, more preferably 0.6 µm or more, and an upper limit of preferably 1.8 µm or less, more preferably 1.6 µm or less.

When the number of depressions in an observed 250 µm × 250 µm region is less than 60, the antiglare effect tends to be smaller in this region. With more than 600 depressions, the extent of scattering of visible light increases in this region, so the display device tends to suffer from poor visibility. Considering these factors, the number of depressions is preferably 100 or more, more preferably 150 or more in a lower limit, and is preferably 550 or less, more preferably 500 or less in an upper limit.

With regard to the distance between the dispersive depressions, the dispersive depressions are spaced apart from one another by a distance of 5 µm or less in preferably at most 10 % of the depressions, and 150 µm or more in preferably at most 10 % of the depressions in terms of a distance from the nearest depression. When the proportion of depressions with a distance of 5 µm or less is more than 10 %, the extent of scattering of reflected visible light locally increases, and the display device tends to suffer from poor visibility. When the proportion of depressions with a distance of 150 µm or more is more than 10 %, the effect that scatters reflected visible light shows a local decrease, and the antiglare effect tends to decrease. Considering these factors, the proportion of depressions with a distance of 5 µm or less is preferably 8 % or less, more preferably 5% or less, and the proportion of depressions with a distance of 150 µm or more is preferably 8 % or less, more preferably 5 % or less. Here, the distance is the distance between the centers of circles representing the dispersive depressions as measured in a front view of the roughened surface.

### ADVANTAGEOUS EFFECTS OF THE INVENTION

The invention can provide a glass sheet article having desirable antiglare properties with reduced sparkling.

### BRIEF DESCRIPTION OF DRAWINGS

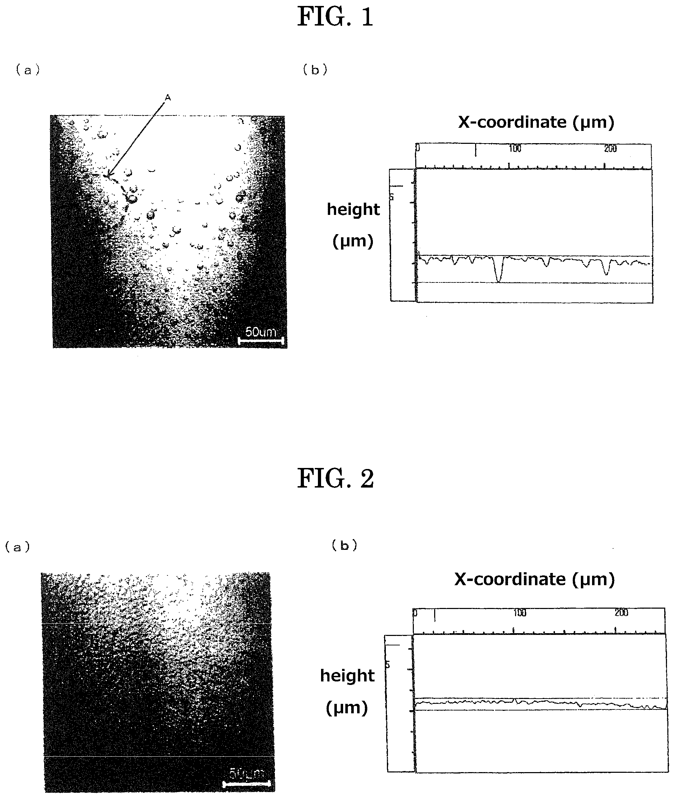

FIG. 1 shows the antiglare glass sheet article of Example 1, in which (a) is a photographic representation of the result of the observation of an arbitrarily selected portion of a roughened surface under a laser microscope, and (b) is a graph representing a profile of a cross section (arbitrarily selected portion) of the roughened surface. In graph (b), the interval is 10 µm on the horizontal axis, and 1 µm on the vertical axis.
FIG. 2 shows the antiglare glass sheet article of Comparative Example 1, in which (a) is a photographic representation of the result of the observation of an arbitrarily selected portion of a roughened surface under a laser microscope, and (b) is a graph representing a profile of a cross section (arbitrarily selected portion) of the roughened surface. In graph (b), the interval is 10 µm on the horizontal axis, and 1 µm on the vertical axis.

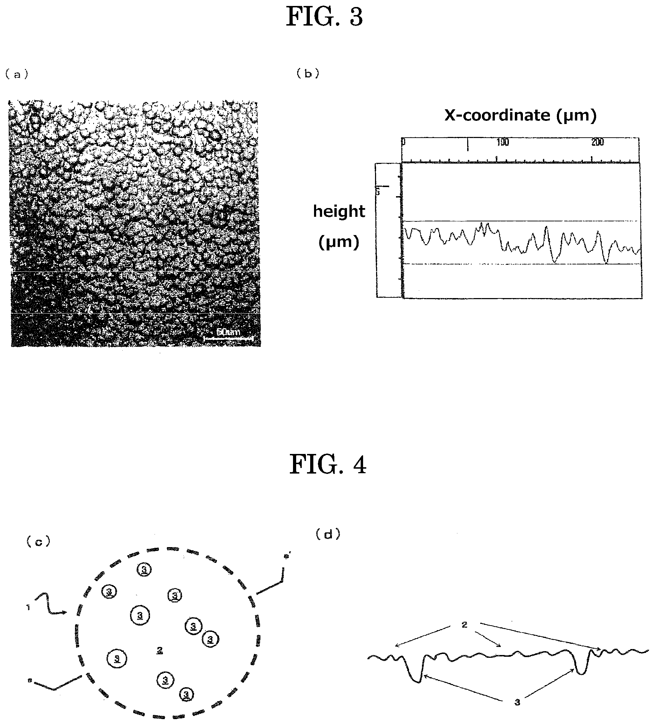

FIG. 3 shows the antiglare glass sheet article of Comparative Example 2, in which (a) is a photographic representation of the result of the observation of an arbitrarily selected portion of a roughened surface under a laser microscope, and (b) is a graph representing a profile of a cross section (arbitrarily selected portion) of the roughened surface. In graph (b), the interval is 10 µm on the horizontal axis, and 1 µm on the vertical axis.
FIG. 4(c) is a diagram schematically explaining region A arbitrarily selected from FIG. 1(a), and FIG. 4(d) is a diagram schematically explaining a cross section taken at a-a' of FIG. 4(c).

### DESCRIPTION OF EMBODIMENTS

### <Glass Sheet>

The composition or the type of the glass sheet used in the invention is not particularly limited, as long as it is a transparent glass. For example, the glass sheet may be a transparent glass sheet made of a wide range of glasses, including transparent soda lime silicate glass, aluminosilicate glass, fused quartz, alkali-free glass, and lithium aluminosilicate glass. For visibility, the glass sheet has a visible light transmittance of preferably 85 % or more.

The shape of the glass sheet is not particularly limited. Particularly preferably, the glass sheet is rectangular in shape. The glass sheet may have a thickness of, for example, 0.1 to 10 mm. When the antiglare glass sheet article of the invention is used as a cover glass or the like of a display device, it is preferable for a balance between glass strength and glass weight to use a glass sheet having a thickness of 0.1 to 1.5 mm.

### <Method of Formation of Roughened Surface>

The roughened surface is formed in two steps by subjecting a main surface of the glass sheet to the first step of sandblasting, and the second step of etching. In the first-step sandblasting, a blasting material is blasted onto a glass sheet surface. Localized cracking occurs in the glass at the point of contact between the blasting material and the glass sheet surface. The crack causes flacking at a surface of the glass, and creates a small depression. Because the depressed portion is weaker than other parts of the surface, the crack propagates, and the depression grows as the blasting material hits the glass sheet surface. This is not a uniform phenomenon that occurs on the glass sheet surface at once, but is a phenomenon that occurs at different locations of the glass sheet surface with a time lag. Specifically, a glass sheet surface observed at early stages of blasting shows nonuniform irregularities that are larger and deeper in depressions formed first, and the surface irregularities have variation. Such surface irregularities with variation are avoided in common blasting of a glass sheet surface, and the process is continued until the surface irregularities become uniform. The conventional blasting of a glass sheet surface typically involves high-pressure blasting materials blasted onto a glass sheet surface, and cannot easily form surface irregularities having variation, that is, a state in early stages of blasting.

In the invention, blasting is deliberately stopped while the surface irregularities have variation, and the second-step etching is performed. Surprisingly, this created a roughened surface having a basal irregular surface and dispersive depressions, suited for antiglare glasses for display devices. The following (i) and (ii) describe these steps in greater detail.

### (i) First Step: Sandblasting

For efficient processing of a glass sheet main surface, the blasting material used in the sandblasting step is preferably a material having a higher hardness than glass (for example, a Mohs hardness of 7 or more, more preferably 8 or more), such as silicon carbide, alumina, or zirconia, and the like.

Preferably, the blasting material has the grain size #800 to #4000 specified in Table 8 of JIS R 6001 (1998). A blasting material with the grain size #240 to #700 outside the preferred range increases the haze of the glass sheet article in the product antiglare glass sheet article because of the large grain diameter, and the article tends to suffer from poor visibility. A blasting material with the grain size #6000 to #8000 often leads to inefficient sandblasting because of the small grain diameter. Considering these factors, the blasting material has a grain size of preferably #1000 to #4000, more preferably #1200 to #3000.

The blast pressure of blasting the blasting material onto the glass sheet is preferably 0.02 to 1 MPa. When the blast pressure is 0.02 to 0.2 MPa in this preferred range, the low blast pressure makes it easier to obtain surface irregularities having variation, that is, a state in early stages of blasting. In order to obtain the antiglare glass sheet article of the invention, it is preferable that the blasting material have a weak collisional energy at impact on the glass sheet surface. However, the sandblasting step often becomes inefficient when the blast pressure is less than 0.02 MPa. Considering the efficiency of the sandblasting step, the blast pressure may have a lower limit of 0.04 MPa, or 0.06 MPa.

When the blast pressure is more than 0.2 MPa, the collisional energy of the blasting material at impact on the glass sheet surface tends to increase, and the energy needs to be reduced. In this case, the collisional energy can be relaxed by widening the blast distance (a distance from the blasting position of the blasting material to the glass sheet surface) to, for example, 220 mm to 400 mm, or by blasting the blasting material toward the glass sheet at a blast angle of 30° or less (with respect to the glass sheet surface at 0°). When the blast pressure is more than 1 MPa, it becomes difficult to take measures for relaxation of collisional energy, and to obtain surface irregularities with variation, that is, a state in early stages of blasting. This increases the size of irregularities on the roughened surface, and it becomes difficult to obtain a roughened surface having the basal irregular surface and dispersive depressions. As a result, the haze of the product antiglare glass sheet article increases, and it becomes difficult to reduce sparkling. The article suffers from poor visibility as a result.

The blasting material is blasted onto the glass sheet at a blast angle of preferably 10 to 90° with respect to the glass sheet surface at 0°. The sandblasting step often becomes inefficient when the blast angle is less than 10°. Considering efficiency, the blast angle is preferably 15° or more, more preferably 20° or more.

The blast distance, which is a distance from a location of the blasting material to be blasted onto the glass sheet to the glass sheet surface, is preferably 1 to 400 mm. When the blast distance is less than 1 mm, the haze of the glass sheet article in the product antiglare glass sheet article increases, and the article tends to suffer from poor visibility. The sandblasting step tends to become inefficient when the blast distance is more than 400 mm. Considering these, the blast distance is preferably 5 to 300 mm, more preferably 10 to 250 mm.

The blasting rate of the blasting material blasted onto the glass sheet is preferably 0.4 to 20 g/s. The sandblasting step tends to become inefficient when the blasting rate is less than 0.4 g/s. When the blasting rate is more than 20 g/s, the product antiglare glass sheet article tends to have an uneven appearance that is visually noticeable. Considering these, the blasting rate is preferably 0.6 to 15 g/s, more preferably 1 to 10 g/s.

### (ii) Second Step: Etching

In the second-step etching, the glass sheet blasted with the blasting material is dipped in a solution of one of hydrofluoric acid, ammonium fluoride, and similar compounds, or a solution of more than one fluorine compound, or in an etchant prepared by adding an acid other than fluorine compounds to the solution. Alternatively, the sandblasted glass sheet surface is contacted to a solution of one of hydrofluoric acid, ammonium fluoride, and similar compounds, or a solution of more than one fluorine compound, or to a mixture of the solution with an acid other than fluorine compounds.

The concentration of the hydrofluoric acid, the ammonium fluoride, or other similar compounds, or the concentration of more than one fluorine compound used in the etching step is preferably 1 to 20 mass%. The etching takes time when the concentration is less than 1 mass%. With a concentration of more than 20 %, the antiglare glass sheet article tends to have an uneven appearance that is visually noticeable, or the basal irregular surface and the dispersive depressions tend to have large irregularities due to overetching. Considering these, the fluorine compound concentration is preferably 0.5 to 18 %, more preferably 1 to 15 %.

The etchant temperature is preferably 15 to 40 °C. The etching takes time when the etchant temperature is less than 15 °C. With an etchant temperature of more than 40 °C, the antiglare glass sheet article tends to have an uneven appearance that is visually noticeable, or the basal irregular surface and the dispersive depressions tend to have large irregularities due to overetching. The etching time is preferably 1 to 60 minutes. The etching tends to become insufficient when the etching time is shorter than 1 minute. An etching time longer than 60 minutes is not preferable because it leads to poor productivity. With an etching time of longer than 60 minutes, the basal irregular surface and the dispersive depressions tend to have large irregularities due to overetching.

### <Method of Formation of Compressional Stress Layer through Chemical Strengthening of Glass Sheet Main Surface>

Chemical strengthening is a collective term used to describe a technique that dips a glass sheet in a molten salt containing alkali metals, and replaces alkali metals (ions) of a small atomic radius present on the outermost surface of the glass sheet with alkali metals (ions) of a large atomic radius present in the molten salt. After chemical strengthening, the surface of the treated glass sheet has alkali metals (ions) of a larger atomic radius than the original atoms. This forms a compressional stress layer on the glass sheet surface, and improves the glass sheet strength.

The glass sheet preferably contains alkali ions, more preferably sodium ions to form a compressional stress layer through chemical strengthening of a main surface of the antiglare glass sheet article of the invention, or, more specifically, to form a chemically strengthened glass. Preferably, chemical strengthening is performed after forming a roughened surface on the glass sheet. The chemically strengthened glass is produced through ion exchange whereby the most abundant alkali metal ion A in the glass sheet is replaced with alkali metal ion B of a larger ion radius than the alkali metal ion A in the surface layer of the glass sheet.

For example, when the alkali metal ion A is a sodium ion (Na⁺ ion), the alkali metal ion B may be at least one of a potassium ion (K⁺ ion), a rubidium (Rb⁺ ion), and a cesium ion (Cs⁺ ion). Preferably, a potassium ion is used as alkali metal ion B when the alkali metal ion A is a sodium ion.

For ion exchange, one or more of nitrates, sulfates, carbonates, hydroxide salts, and phosphates containing at least alkali metal ion B may be used. When the alkali metal ion A is a sodium ion, it is preferable to use a nitrate containing at least a potassium ion.

A chemically strengthened glass is produced through the step of contacting a chemically reinforceable glass sheet to a salt containing the alkali metal ion B. As used herein, "contacting a chemically reinforceable glass sheet to a salt" means contacting or dipping the chemically reinforceable glass sheet in a salt bath. The term "contact" as used herein is a concept that encompasses "dipping".

The salt may directly contact the glass sheet in the form of a paste, or the glass sheet may be dipped in a molten salt that has been heated to the melting point or higher temperatures. Preferably, the glass sheet is dipped in a molten salt.

### (Preheating Step)

The temperature of the glass sheet contacted to a salt is not particularly limited. Specifically, the glass sheet may contact a salt at room temperature or at a heated temperature. Preferably, the glass sheet is contacted after being heated. The preheating temperature is preferably no higher than the glass transition point of the glass sheet. When heated to the glass transition point or higher temperatures, the glass sheet will deform, and cannot have the desired shape or dimensions after chemical strengthening. The preheating temperature may be the same as the temperature of the contacting salt to be described later, or above or below the salt temperature. The preheating time is not particularly limited.

### (Ion Exchange Step)

The temperature of the contacting salt is not particularly limited. However, when dipping the glass sheet in a molten salt, the salt temperature is preferably no greater than the strain point of the glass sheet, and not less than the melting point of the contacting salt. When the salt temperature is a temperature equal to or greater than the distortion point, the compressional stress due to ion exchange tends to relax, and the desired surface compressional stress cannot be obtained. When the contacting salt uses a potassium ion as alkali metal ion B, the glass sheet is dipped at a temperature between 333 °C and no greater than the strain point of the glass sheet because the potassium nitrate has a melting point of 333 °C. The preferred temperature range is between 350 °C and a temperature 10 °C below the strain point of the glass sheet, more preferably between 370 °C and a temperature 20 °C below the strain point of the glass sheet.

The contact time of the glass sheet with the salt is not particularly limited, and is preferably 0.5 to 8 hours when the glass sheet is dipped in a molten salt. When the contact time is less than 0.5 hours, the ion exchange between alkali metal ion A and alkali metal ion B does not proceed sufficiently, and neither the desired surface compressional stress nor the desired compression layer depth can be obtained. When the contact time is 8 hours or longer, the surface compressional stress due to ion exchange tends to relax. The contact time is preferably 0.5 to 6 hours, more preferably 1 to 5 hours.

### (Cooling Step)

The glass sheet contacted to a salt for a predetermined time period is cooled to room temperature in a cooling step. The cooling step includes cooling the glass sheet under a controlled cooling rate after the glass sheet contacted to a salt is placed in a furnace maintained at a predetermined temperature (slow cooling), and quenching whereby the glass sheet is cooled by directly exposed to room temperature (natural cooling). Slow cooling is preferred because quenching may cause cracking in the glass sheet. The cooling rate is appropriately adjusted according to the glass sheet dimensions. The cooling step may cool the glass sheet with the salt adhering to the glass sheet, and the atmosphere of slow cooling is not particularly limited. After cooling, the salt adhering to the glass sheet is removed by washing with, for example, hot water or cold water to obtain a chemically strengthened glass.

The preheating step, the ion exchange step, and the cooling step that produce a chemically strengthened glass are not required to be one process. Specifically, these steps producing a chemically strengthened glass may be performed more than once, and the temperature and the time of the preheating step, the ion exchange step, and the cooling step are not necessarily required to be the same in these steps. It is also not necessarily required that the salt used in the ion exchange step has the same form. When performing the foregoing steps two or more times, one or both of the preheating step and the slow cooling step between the ion exchange steps may be omitted.

The surface compressional stress (CS), and the compression layer depth (DOL) of the chemically strengthened glass produced through the foregoing steps may be measured using a surface stress meter that works under the principle of the optical waveguide effect. The surface compressional stress may be adjusted over a range of 300 to 1,300 MPa, and the compression layer depth (DOL) may be adjusted over a range of 5 to 50 µm.

### EXAMPLES

Examples of the invention are described below. The following methods were used to evaluate antiglare glass sheet articles.

### 1. Measurements of Arithmetic Average Roughness (Ra), and Average Interval (RSm) of Basal Irregular Surface

A real-time scanning laser microscope (1LM21DW) available from Lasertec Corporation was used for measurement. The device was used with a laser wavelength of 632.8 nm, a light source output of 1.5 mW, a horizontal resolution of 0.3 µm, and a height resolution of 0.01 µm.

### 2. Counting Dispersive Depressions in Predetermined Region

The number of dispersive depressions in a predetermined region (250 µm × 250 µm) was determined from a cross sectional view under a laser microscope. Depressions having a circular entrance portion with a diameter of 3 µm to 20 µm, and a depth of 0.2 µm to 1.5 µm from the entrance portion were determined as dispersive depressions, and used for the measurement of dispersive depressions. The distance between depressions was also determined by measuring the distance from the nearest depression.

### 3. Gloss Value (Gs) Measurement

Gloss value was measured with a black flock paper (Gs = 0%) placed on the back surface (the surface opposite the roughened surface), using a method according to Method 3 of JIS Z8741 (1997). A gloss checker (IG-320) available from Horiba Ltd. was used for the measurement.

### 4. Haze Measurement

Haze was measured according to JIS K7136 (2000), using a table haze meter (HZ-T) available from Suga Test Instruments Co., Ltd.

### 5. Evaluation of Display Image Appearance of Display Device (Visibility of Display Device)

The appearance of display image was evaluated with the unroughened surface of the antiglare glass sheet article placed in contact with a display device (LCD panel), in a scale of 1 to 5. The evaluation was made relative to the reference point of 3 of when the antiglare glass sheet article was not used. The display image was determined as unacceptable for the scores less than 1.5, moderate for the scores of 1.5 or higher and less than 3, and acceptable for the scores of 3 or higher. An LCD display panel with 326 ppi resolution was used for the testing, and the evaluation was conducted in a room with an illuminance of 1,000 lux.

### 6. Sparkling Evaluation

The unroughened surface of the antiglare glass sheet article was placed in contact with a display device (LCD panel). With the device set to display a white blank screen, the antiglare glass sheet article was visually observed in normal direction, and the extent of sparkling was determined in a three-level evaluation. The evaluation was acceptable when sparkling was not observable, moderate when sparkling was slightly observable, and unacceptable when sparkling was clearly observable. An LCD display panel with 326 ppi resolution was used for the testing, and the evaluation was conducted in a room with an illuminance of 1,000 lux.

### <Production of Antiglare Glass Sheet Article>

### Example 1

A rectangular soda lime silicate glass, measuring 30 mm × 30 mm in size and 1 mm in thickness, obtained by using a floating method was used a glass sheet. A main surface of the glass sheet was subjected to first-step sandblasting under the following conditions:
Blasting material: silicon carbide (#2000)
Blast pressure: 0.1 MPa
Blast angle: 40°
Blasting rate: 4 g/s
Blast time: 2 s
Blast distance: 50 mm

This was followed by second-step etching, in which the glass sheet was dipped in 25 °C, 5 mass% hydrofluoric acid for 10 min to obtain an antiglare glass sheet article. FIG. 1(a) represents the result of the observation of an arbitrarily selected portion of the roughened surface under a laser microscope, and FIG. 1(b) shows a profile of a cross section (arbitrarily selected portion) of the roughened surface. For understanding of the invention, FIG. 4 shows schematic views of the roughened surface obtained in this example. FIG. 4(c) schematically illustrates the region A of FIG. 1, showing a roughened surface 1 including a basal irregular surface 2, and dispersive depressions 3 dispersed over the basal irregular surface. FIG. 4(d) is a cross section taken at a-a' of FIG. 4(c), schematically illustrating the dispersive depressions 3, appearing as large depressions, in the small irregular pattern of the basal irregular surface 2.

### Example 2

An antiglare glass sheet article was obtained using the same process performed in Example 1, except that the first-step sandblasting was performed with a silicon carbide (#2500) blasting material at a blast angle of 30°.

### Example 3

An antiglare glass sheet article was obtained using the same process performed in Example 2, except that the first-step sandblasting was performed with a blast distance of 150 mm.

### Example 4

The glass obtained in Example 3 was preheated at 450 °C for 30 min, and dipped in a 450 °C. potassium nitrate molten salt for 240 min to obtain a chemically strengthened antiglare glass sheet article. The article had a surface compressional stress of about 600 MPa, and a compression layer depth of 16 µm on both surfaces. There was no change in the shape of irregularities, and in optical characteristics.

### Comparative Example 1

An antiglare glass sheet article was obtained using the same process performed in Example 1, except that the glass sheet was dipped for 10 min in a 25 °C mixture (7 g of ammonium fluoride, 84 g of N,N-dimethylformamide, and 42 g of water) in the first step. FIG. 2(a) shows the result of the observation of an arbitrarily selected portion of the roughened surface under a laser microscope, and FIG. 2(b) shows a profile of a cross section (arbitrarily selected portion) of the roughened surface.

### Comparative Example 2

An antiglare glass sheet article was obtained using the same process performed in Example 1, except that the first-step sandblasting was performed with an alumina (#1500) blasting material at a blast angle of 90° under a blast pressure of 0.4 MPa. FIG. 3(a) shows the result of the observation of an arbitrarily selected portion of the roughened surface under a laser microscope, and FIG. 3(b) shows a profile of a cross section (arbitrarily selected portion) of the roughened surface.

### Comparative Example 3

An antiglare glass sheet article was obtained using the same process performed in Comparative Example 2, except that the first-step sandblasting was performed with an alumina (#2000) blasting material at a blast distance of 200 mm under a blast pressure of 0.3 MPa.

### <Results of Evaluations of Antiglare Glass Sheet Article>

Table 1 summarizes the results of the evaluations of the six articles obtained in Examples and Comparative Examples. In Examples 1 and 2, depressions of a shape that did not fall within the defined shape were not observed in the measurement of dispersive depressions.

Comparative Example 1 had only the basal irregular surface, and dispersive depressions were absent. Comparative Example 2 had irregularities of a shape with Ra = 0.26 µm and RSm = 19 µm throughout the surface, and did not have a region defined by the basal irregular surface. It was accordingly not possible to define dispersive depressions. Comparative Examples 2 and 3 are similar to conventional methods in terms of formation of a roughened surface on a glass sheet through sandblasting and etching. For reasons of one or more of the excessively large blasting material grain size, the excessively high blast pressure, the excessively short blast distance, and the excessively high blasting rate, the traditional methods failed to produce the antiglare glass sheet article specified by the invention, and the characteristics were inferior in terms of the appearance of display image, and sparkling.

**[Table 1]**

| | Basal irregular surface | | Number of dispersive depressions | Proportion of distance from the nearest depression falling in predetermined range | | Gs (%) | Haze (%) | Appearance of display image | Sparkling |
|---|---|---|---|---|---|---|---|---|---|
| | Ra (µm) | RSm (µm) | | | | | | | |
| | | | | Proportion (%) of depression distance of 5 µm or less | Proportion (%) of depression distance of 150 µm or more | | | | |
| Ex. 1 | 0.067 | 16 | 410 | 5 | 0 | 94 | 17 | Acceptable | Acceptable |
| Ex. 2 | 0.055 | 12 | 280 | 3 | 0 | 110 | 11 | Acceptable | Acceptable |
| Ex. 3 | 0.063 | 3.3 | 88 | 1 | 2 | 119 | 8 | Acceptable | Acceptable |
| Com. Ex. 1 | 0.050 | 17 | 0 | - | - | 117 | 13 | Unacceptable (nonuniformalty) | Acceptable |
| Com. Ex. 2 | - | - | - | - | - | 12 | 61 | Unacceptable (high haze) | Unacceptable |
| Com. Ex. 3 | 0.072 | 19 | 723 | 80 | 0 | 66 | 27 | Unacceptable (high haze) | Mode rate |

### INDUSTRIAL APPLICABILITY

The antiglare glass sheet article for display devices of the invention has not only desirable antiglare properties but reduced sparkling. This makes the antiglare glass sheet article preferred for use as, for example, a cover glass of smart terminals such as tablet computers and smartphones, or as a glass substrate used for liquid crystal devices and organic EL devices. The glass sheet may have the roughened surface on one or both of its main surfaces. When the roughened surface is formed only on one side, it is preferable that the roughened surface is on the viewer's side of the display device.

### REFERENCE SIGNS LIST

- 1: Roughened surface
- 2: Basal irregular surface
- 3: Dispersive depression

## Claims

1. An antiglare glass sheet article for a display device, comprising a glass sheet at least one main surface of which is roughened,
wherein the roughened surface includes:
a surface with continuous irregularities having an arithmetic average roughness (Ra) of 0.01 to 0.1 µm, and an average interval (RSm) of 1 to 20 µm; and
depressions dispersed over the surface and each having a circular entrance portion measuring 3 to 20 µm in diameter, and a depth of 0.2 to 1.5 µm from the entrance portion, and
the roughened surface has 60 to 600 of the depressions in an observed 250 µm × 250 µm region.

2. The antiglare glass sheet article as claimed in claim 1, wherein the depressions are spaced apart from one another by a distance of 5 µm or less in at most 10 % of the depressions, and 150 µm or more in at most 10 % of the depressions in terms of a distance from the nearest depression.

3. The antiglare glass sheet article as claimed in claim 1 or 2, wherein the roughened surface is formed by etching a glass sheet surface blasted with a blasting material.

4. The antiglare glass sheet article as claimed in any one of claims 1 to 3, which includes a compressional stress layer on a main surface of the glass sheet.

5. A method for producing the antiglare glass sheet article of any one of claims 1 to 4, comprising:
a step (A) of preparing a glass sheet;
a step (B) of blasting a blasting material onto a main surface of the glass sheet; and
a step (C) of etching the main surface of the glass sheet,
wherein the blasting material is blasted onto the main surface of the glass sheet in the step (B) at a blast pressure of 0.02 to 0.2 MPa.

6. A method for producing the antiglare glass sheet article of any one of claims 1 to 4, comprising:
a step (A) of preparing a glass sheet;
a step (B) of blasting a blasting material onto a main surface of the glass sheet; and
a step (C) of etching the main surface of the glass sheet,
wherein the blasting material is blasted onto the main surface of the glass sheet in the step (B) at a blast pressure of more than 0.2 MPa and not more than 1.0 MPa, and
wherein the distance from a location of the blasting material to be blasted onto the glass sheet to the glass sheet surface is 220 mm to 400 mm, or the blasting material is blasted onto the glass sheet at a blast angle of 30° or less (with respect to the glass sheet surface at 0°).
